# FASCICULE DE BREVET EUROPEEN

(11) **EP 4 091 905 B1**
(45) Date de publication et mention de la délivrance du brevet: **06.05.2026**
(21) Numéro de dépôt: 22173877.6
(22) Date de dépôt: 17.05.2022
(51) Int. Cl.: B62B 7/04, B62B 7/08, B62B 9/10, B62B 9/24, B62J 25/04, B62K 9/02, B62K 15/00

(54) **VÉHICULE POUR ENFANT**
FAHRZEUG FÜR KINDER
VEHICLE FOR A CHILD

(30) Priorité: 18.05.2021 FR 2105142
(43) Date de publication de la demande: 23.11.2022
(73) Titulaire: ID Development Limited, Hong Kong (HK)
(72) Inventeur: MAZOYER, Joseph, 69007 Lyon (FR); BAJARD, Philippe, 69005 Lyon (FR)
(74) Mandataire: LLR

(56) Documents cités:
- WO-A2-2013/036990
- KR-A- 20110 114 963
- US-A1- 2018 257 727

## Description

La présente invention concerne le domaine technique des véhicules pour enfants, et notamment le domaine véhicules transformables pour petits enfants.

Il est connu de l'état de la technique un véhicule pour enfant comprenant une roue avant et deux roues arrière. Chaque roue arrière est montée rotative sur un porte-roues autour d'un axe de rotation qui est sensiblement perpendiculaire au plan formé par les deux porte-roues. Ainsi, les deux roues arrière sont mobiles entre une position tricycle où elles sont écartées entre elles et une position vélo où elles sont en contact l'une avec l'autre pour former une seule roue. Les porte-roues sont également mobiles dans le plan qu'ils forment. Les porte-roues sont rapprochés en mode vélo et écartés en mode tricycle.

Le véhicule tel que connu de l'état de la technique n'est pas compact pour le transport. Hors utilisation par un enfant, un adulte doit déplacer le véhicule ayant un encombrement important et il n'est pas possible de le ranger dans un espace réduit, par exemple dans un coffre de voiture ou une soute d'avion.

On connaît déjà des documents US 2018/0257727 et WO 2013/036990 un véhicule pour enfant qui peut être plié pour passer d'une configuration d'utilisation à une configuration de rangement.

Par ailleurs, pour passer d'un mode à l'autre, il est nécessaire de manipuler les porte-roues pour modifier l'angle entre eux, ce qui est compliqué et fait perdre du temps.

L'invention a notamment pour but de proposer un véhicule pour enfant qui est compact pour le transport, tout en étant robuste et stable en utilisation.

A cet effet l'invention est définie par la revendication 1 et a pour objet un véhicule pour enfant comprenant :
- un corps de véhicule présentant une extrémité avant et une extrémité arrière,
- une unité avant de direction montée sur l'extrémité avant et comprenant une colonne de direction sur laquelle sont montés une roue avant et un guidon,
- un siège monté entre l'extrémité avant et l'extrémité arrière,
- une première roue arrière reliée au corps de véhicule via un premier porte-roue et une seconde roue arrière reliée au corps de véhicule via un second porte-roue,

les premier et second porte-roues étant montés rotatifs sur l'extrémité arrière entre une configuration compacte dans laquelle les première et seconde roues arrière sont positionnées à proximité de l'extrémité avant et une configuration déployée dans laquelle les première et seconde roues arrière sont éloignées de l'extrémité avant de manière à être opérationnelles,
les première et seconde porte-roues étant mobiles entre les deux configurations de façon indépendante l'un par rapport à l'autre.

Ceci permet d'offrir une configuration compacte du véhicule pour pouvoir être transporté ou trainé par terre pour un déplacement facile. En effet, lorsque les porte-roues sont dans la configuration compacte, toute la longueur des porte-roues se rapproche de façon adjacente du corps de véhicule pour ramener les roues arrière vers l'avant du véhicule ce qui diminue significativement le volume du véhicule.

On comprend que la configuration compacte correspond à une configuration où le véhicule est plié dans son ensemble de façon compacte pour être transporté ou trainé par terre et que la configuration déployée correspond à une configuration où le véhicule est opérationnel, c'est-à-dire, en mode vélo ou tricycle.

Suivant d'autres caractéristiques optionnelles de l'invention, prises seules ou en combinaison :
- Le premier porte-roue est monté rotatif autour d'un premier axe de rotation sur l'extrémité arrière et le second porte-roue est monté rotatif autour d'un second axe de rotation sur l'extrémité arrière, chacun des premier et deuxième axes de rotation forme avec le plan médian du corps de véhicule un angle compris entre 60° et 90° inclus. De préférence, ledit angle est compris entre 70° et 85°. Selon un mode de réalisation, ledit angle est d'environ 80°.

Avec une telle configuration, les axes de rotation sont verticaux, ou très proches d'une position où ils sont orthogonaux avec la verticale. Autrement dit, les axes de rotation sont orientés de manière telle qu'ils ne sont pas sollicités en torsion lorsque les porte-roues sont en position déployée. Ainsi les poids du véhicule et de l'enfant assis sur le siège ont peu d'impact sur les jeux nécessaires pour le mouvement des porte-roues car ces mouvements sont sensiblement transversaux. Le véhicule est donc plus stable lors de son utilisation et risque moins de s'abîmer avec le temps.

En effet, dans le véhicule de l'état de la technique, comme les axes de rotation sont sensiblement perpendiculaires au plan formé par les deux porte-roues, ils sont sensiblement verticaux. Ainsi, le poids du véhicule et le poids de l'enfant exercent une torsion sur ces axes, ce qui peut fragiliser le montage axial après un certain temps d'utilisation.

On comprend que le plan médian correspond à un plan séparant le véhicule en une partie gauche et une partie droite qui sont symétriques par rapport au plan. Le plan médian contient le plus souvent la verticale lorsque le véhicule est utilisé.
- Le premier axe de rotation et le deuxième axe de rotation sont normaux à des plans qui sont sécants entre eux.

Ceci permet de rapprocher d'avantage les roues arrière en configuration compacte pour une meilleure compacité.

De préférence, les axes de rotation sont inclinés vers l'avant du véhicule de manière à ce que la distance entre les roues arrière est plus petite en configuration compacte que celle en configuration déployée.
- La première roue arrière est montée rotative sur le premier porte-roue autour d'un troisième axe de rotation et la seconde roue arrière est montée rotative sur le second porte-roue autour d'un quatrième axe de rotation, le troisième axe de rotation et le quatrième axe de rotation étant agencés sensiblement parallèles au plan médian du corps de véhicule.

La rotation des roues arrière permet de convertir le véhicule en tricycle ou en vélo. Le fait que les axes de rotation sont agencés parallèles au plan médian du corps de véhicule permet de garantir que les roues sont dans l'alignement de la marche du véhicule quelque soit la configuration tricycle ou vélo.

De préférence, les axes de rotation sont compris dans le plan défini par le premier porte-roue et le second porte-roue.
- Chaque roue arrière est montée rotative sur un élément intermédiaire qui est lui-même rotatif autour du troisième axe de rotation ou du quatrième axe de rotation, chaque élément intermédiaire étant relié au porte-roue par un emmanchement.

Par ailleurs, le côté axial de chaque roue arrière opposé au porte-roue est plan et l'épaisseur de chaque roue arrière entre le côté plan et le côté opposée est inférieure à la moitié de la distance entre les porte-roues.
- Le véhicule comprend des moyens de verrouillage pour maintenir les porte-roues dans la configuration compacte ou la configuration déployée.

Par exemple, les moyens de verrouillage peuvent être constitués d'un bouton poussoir.
- Le corps de véhicule comprend des formes latérales configurées pour coopérer avec une extrémité du porte-roue de manière à permettre une rotation d'environ 180° du porte-roue dans une zone délimitée par le corps de véhicule et le sol lorsque les porte-roues sont dans la configuration déployée.

On comprend donc que les roues sont ramenées vers l'avant en passant sous le tricycle.
- Selon la revendication 1 le véhicule comprend un cale-pied entre l'extrémité avant et l'extrémité arrière, le cale-pied comprenant un support de cale-pied et deux volets agencés de part et d'autre du support de cale-pieds, les volets étant configurés pour coopérer avec les porte-roues pour passer d'une position horizontale à une position verticale.

Les extrémités des volets sont configurées pour entrer en contact avec les porte-roues lorsqu'ils arrivent à une position intermédiaire prédéterminée entre la configuration compacte et la configuration déployée. Le mouvement des porte-roues entraîne ensuite la remontée des volets.

Par ailleurs, les volets présentent des formes symétriques par rapport au support de cale-pied.

On comprend que les volets sont sensiblement parallèles au sol quand ils sont en position horizontale et sensiblement perpendiculaire au sol quand ils sont en position verticale.
- Les volets sont montés rotatifs sur des axes de rotation qui sont normaux à des plans sécants entre eux.
- Le véhicule comprend des moyens de retenue des volets en position verticale, les moyens de retenu étant distincts des porte-roues.

Ainsi, les volets sont verrouillés en position verticale même quand les porte-roues passent dans la configuration déployée ce qui évite toute ouverture involontaire des volets. Par ailleurs, on évite des mouvements de battement des volets en position verticale en raison de la présence de jeux entre les pièces.

Les moyens de retenue sont, par exemple, un élément mobile de blocage des volets ou un élément permettant un encliquetage entre les volets et le support de cale-pied.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un véhicule pour enfant selon un mode de réalisation de l'invention, le véhicule étant en configuration déployée ;
[Fig. 2] la figure 2 est une vue de dessus du véhicule pour enfant de la figure 1 ;
[Fig. 3] la figure 3 est une vue en perspective du véhicule pour enfant de la figure 1, le véhicule étant en configuration compacte ;
[Fig. 4] la figure 4 est un ensemble de vues (figure 4a et 4b) d'un cale-pied dans ses différentes positions, le cale-pied étant agencé sur le véhicule pour enfant de la figure 1.

### Description détaillée

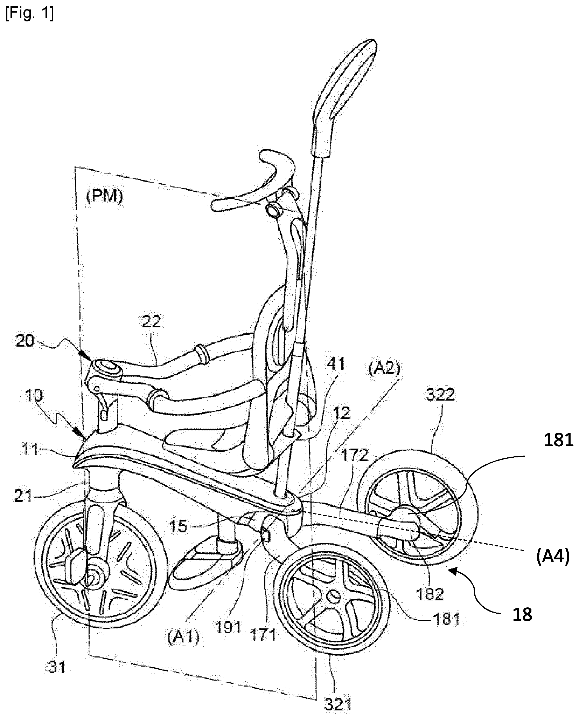

On a représenté sur les figures 1 à 4 un véhicule pour enfant selon un mode de réalisation de l'invention, désigné par la référence générale 1. Le véhicule comprend un corps de véhicule 10 présentant une extrémité avant 11 pourvue d'une unité avant de direction 20. L'unité avant de direction 20 comprend une colonne de direction 21 sur laquelle sont montés une roue avant 31 et un guidon 22. Le corps de véhicule 10 présente encore une extrémité arrière 12 sur laquelle sont montées une première roue arrière 321 et une seconde roue arrière 322. Les première et seconde roues arrière 321, 322 sont reliées à l'extrémité arrière 12 du corps de véhicule 10 via des porte-roues 171, 172.

Tel que visible à la figure 1, le véhicule pour enfant 1 comprend en outre un siège 41 monté entre l'extrémité avant 11 et l'extrémité arrière 12 et relié au corps de véhicule 10 par un tube de montage 21 traversant un trou disposé sur le corps de véhicule 10. Le véhicule comprend également une tige 70 de manoeuvre par un adulte qui est placée à l'arrière du véhicule. La tige 70 comprend une poignée 11 de contrôle du véhicule par l'adulte accompagnateur. La tige 70 est engagée dans un logement disposé à l'arrière du corps de véhicule 10.

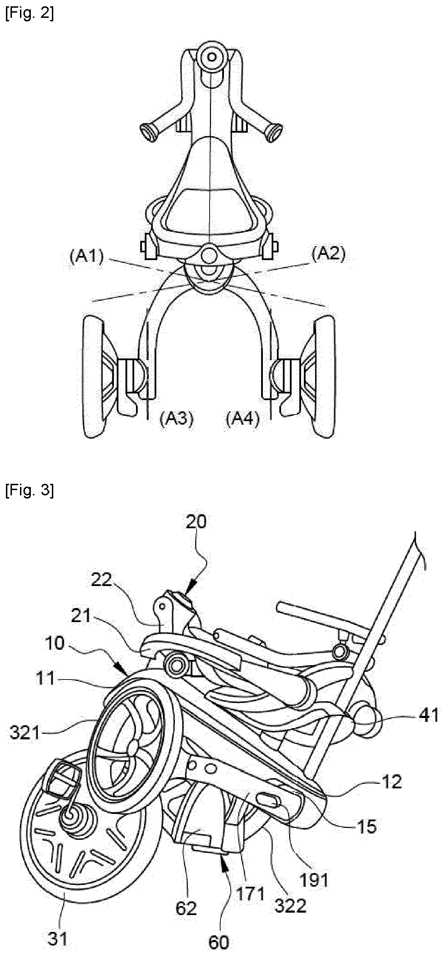

Les figures 1 et 2 illustrent le véhicule pour enfant 1 dans sa configuration déployée. La roue avant 321 et les roues arrière 321, 322 étant en position de roulement, le véhicule est opérationnel en tant que tricycle. Tel que visible dans ces figures, le premier porte-roue 171 est monté rotatif autour d'un premier axe de rotation (A1) sur l'extrémité arrière 12 et le second porte-roue 172 est monté rotatif autour d'un second axe de rotation (A2) sur l'extrémité arrière 12. De ce fait, les premier et second porte-roues sont mobiles en rotation de façon indépendante l'un par rapport à l'autre. Chacun des premier et deuxième axes de rotation (A1, A2) forme avec le plan médian (PM) du corps de véhicule (10) un angle d'environ 80°. Dans le mode de réalisation illustré, chaque axe de rotation forme avec le plan médian (PM) un angle non droit de telle manière que le premier axe de rotation (A1) et le deuxième axe de rotation (A2) sont normaux à des plans qui sont sécants entre eux tel que visible à la figure 2 notamment. L'orientation des axes de rotation A1 et A2 permet en particulier que les poids du véhicule et d'un éventuel enfant assis dessus sollicite les axes A1 et A2 de manière transversale, grâce au fait que lesdits axes sont sensiblement horizontaux. Les poids n'ont donc pas d'effet sur les jeux de fonctionnement des axes qui sont nécessaires à leur rotation, ni sur la résistance des axes à la torsion.

Toujours aux figures 1 et 2, il est visible que chaque roue arrière 171, 172 est montée rotative sur un élément intermédiaire 18. Chaque élément intermédiaire 18 comprend une première portion 181 recevant, de façon rotative, la roue arrière correspondante et une seconde portion 182 ayant une forme sensiblement cylindrique. Chaque porte-roue 171, 172 présente une extrémité creuse pour recevoir la seconde portion 182 de l'élément intermédiaire 18 par emmanchement.

Selon une variante particulière, le tricycle peut être transformé en vélo en mettant côte-à-côte les deux roues arrière. A cet effet, chaque seconde portion 182 de l'élément intermédiaire 18 est montée rotative sur le porte-roue correspondant de manière à ce que l'élément intermédiaire 18 soit rotatif autour d'un troisième axe de rotation (A3) ou d'un quatrième axe de rotation (A4), le troisième axe de rotation (A3) et le quatrième axe de rotation (A4) étant agencés sensiblement parallèles au plan médian (PM) du corps de véhicule 10.

La figure 3 illustre le véhicule pour enfant 1 lorsqu'il est dans sa configuration compacte. Pour ce faire, en partant de la configuration déployée du véhicule où les roues arrière 321, 322 sont éloignées de l'extrémité avant 11, les porte-roue 171, 172 sont tournés autour de leurs axes de rotation A1, A2 dans le sens horaire (S1) selon la figure 1 pour amener les première et seconde roues arrière 321, 322 vers l'extrémité avant 11 du corps de véhicule 10. En fin de rotation et lorsque le véhicule est en configuration compacte, les porte-roues 171, 172 sont sensiblement parallèles au corps de véhicule 10 et les roues arrière 321, 322 sont adjacentes de l'extrémité avant 11.

Tel que visible aux figures 1 et 3, le corps de véhicule 10 comprend des formes latérales 15 qui sont des échancrure 15 agencées sur chaque côté latéral de l'extrémité arrière 12 du corps de véhicule 10. Chaque échancrure 15 est dimensionnée pour coopérer avec une extrémité du porte-roue 171, 172 de manière à permettre une rotation d'environ 180° du porte-roue dans le sens horaire (S1).

Afin de maintenir les porte-roues 171, 172 dans la configuration compacte ou la configuration déployée, le véhicule pour enfant 1 comprend des moyens de verrouillage 191, 192 qui sont des boutons poussoir agencés sur chaque porte-roue 171, 172 et coopérant avec le corps de véhicule 10 pour les verrouillages des porte-roues 171, 172.

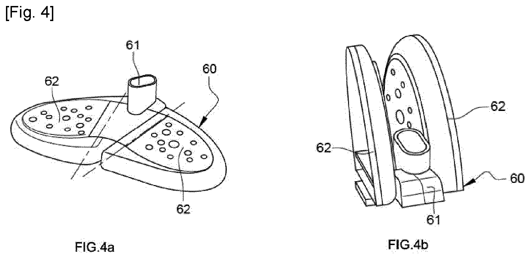

Les figures 4a et 4b illustrent un cale-pied 60 qui est également visible dans les figures 1 et 3 dans sa version montée sur le véhicule pour enfant 1. Le cale-pied 60 est agencé entre l'extrémité avant 11 et l'extrémité arrière 12 du corps de véhicule 10 et comprend un support de cale-pied 61. Le cale-pied 60 comprend en outre deux volets 62 agencés de part et d'autre du support de cale-pied 61, les volets 62 étant configurés pour coopérer avec les porte-roues 171, 172 pour passer d'une position horizontale illustrée par les figures 1 et 4a à une position verticale illustrée par les figures 3 et 4b.

Les volets 62 présentent des formes symétriques par rapport au support de cale-pied 61. Chaque volet 62 a une largeur (L) suffisamment importante pour que les extrémités des volets 62 puissent entrer en contact avec les porte-roues 171, 172 lorsque ceux-ci arrivent à une position intermédiaire prédéterminée entre la configuration compacte et la configuration déployée. Le mouvement des porte-roues 171, 172 entraîne ensuite la remontée des volets. En fonction de l'écartement des porte-roues 171, 172 et le positionnent du cale-pied 60 sur le véhicule, l'homme du métier pourrait facilement obtenir la largeur (L) satisfaisante en faisant des calculs ou des tests.

Par ailleurs tel qu'illustré par la figure 4a, chaque volet 62 est monté rotatif sur un axe de rotation cale-pied (A5, A6). Les deux axes de rotation cale-pied (A5, A6) sont normaux à des plans sécants entre eux. Dans l'exemple illustré, les volets 62 sont maintenus en position verticale par les porte-roues 171, 172 lorsque le véhicule pour enfant 1 est dans sa configuration compacte.

L'invention n'est pas limitée aux modes de réalisation présentés et d'autres modes de réalisation apparaîtront clairement à l'homme du métier. Il est notamment possible d'envisager des moyens de retenue des volets en position verticale, les moyens de retenu étant distincts des porte-roues 171, 172. L'invention est définie uniquement par la revendication 1. Des modes de réalisation préférés sont définis dans les revendications dépendantes.

### Liste de références

1 : véhicule pour enfant
10 : corps de véhicule
11 : extrémité avant
12 : extrémité arrière
15 : formes latérales
20 : unité avant de direction
21 : colonne de direction
22 : guidon
31 : roue avant
41 : siège
41 : tube de montage
60 : cale-pied
61 : support de cale-pied
62 : volets
70 : tige
71 : poignée
171 : premier porte-roue
172 : second porte-roue
18 : élément intermédiaire
181 : première portion
182 : seconde portion
191, 192 : moyens de verrouillage
321 : première roue arrière
322 : seconde roue arrière
A1 : premier axe de rotation
A2 : deuxième axe de rotation
A3 : troisième axe de rotation
A4 : quatrième axe de rotation
A5, A6 : axes de rotation cale-pied
PM : plan médian
S1 : sens horaire

## Revendications

1. Véhicule pour enfant comprenant :
- un corps de véhicule (10) présentant une extrémité avant (11) et une extrémité arrière (12),
- une unité avant de direction (20) montée sur l'extrémité avant (11) et comprenant une colonne de direction (21) sur laquelle sont montés une roue avant (31) et un guidon (22),
- un siège (41) monté entre l'extrémité avant (11) et l'extrémité arrière (12),
- une première roue arrière (321) reliée au corps de véhicule (10) via un premier porte-roue (171) et une seconde roue arrière (322) reliée au corps de véhicule (10) via un second porte-roue (172), les premier et second porte-roues (171, 172) étant montés rotatifs sur l'extrémité arrière (12) entre une configuration compacte dans laquelle les première et seconde roues arrières (321, 322) sont positionnées à proximité de l'extrémité avant (11) et une configuration déployée dans laquelle les première et seconde roues arrière (321, 322) sont éloignées de l'extrémité avant (11) de manière à être opérationnelles,
les premier et second porte-roues (171, 172) étant mobiles entre les deux configurations de façon indépendante l'un par rapport à l'autre, le véhicule comprenant en outre un cale-pied (60) comprenant un support de cale-pied (61) et deux volets (62) agencés de part et d'autre du support de cale-pied (61),
**caractérisé en ce que**
le cale-pied (60) est situé entre l'extrémité avant (11) et l'extrémité arrière (12), les volets (62) étant configurés pour coopérer avec les porte-roues (171, 172) pour passer d'une position horizontale à une position verticale.

2. Véhicule pour enfant selon la revendication 1 dans lequel le premier porte-roue (171) est monté rotatif autour d'un premier axe de rotation (A1) sur l'extrémité arrière (12) et le second porte-roue (172) est monté rotatif autour d'un second axe de rotation (A2) sur l'extrémité arrière (12), chacun des premier et deuxième axes de rotation (A1, A2) forme avec le plan médian (PM) du corps de véhicule (10) un angle compris entre 60° et 90° inclus.

3. Véhicule pour enfant selon la revendication précédente dans lequel le premier axe de rotation (A1) et le deuxième axe de rotation (A2) sont normaux à des plans qui sont sécants entre eux.

4. Véhicule pour enfant selon l'une quelconque des revendications précédentes dans lequel la première roue arrière (321) est montée rotative sur le premier porte-roue (171) autour d'un troisième axe de rotation (A3) et la seconde roue arrière (322) est montée rotative sur le second porte-roue (172) autour d'un quatrième axe de rotation (A4), le troisième axe de rotation (A3) et le quatrième axe de rotation (A4) étant agencés sensiblement parallèles au plan médian (PM) du corps de véhicule (10).

5. Véhicule pour enfant selon la revendication précédente dans laquelle chaque roue arrière (321, 322) est montée rotative sur un élément intermédiaire (18) qui est lui-même rotatif autour du troisième axe de rotation (A3) ou du quatrième axe de rotation (A4), chaque élément intermédiaire (18) étant relié au porte-roue (171, 172) par un emmanchement.

6. Véhicule pour enfant selon l'une quelconque des revendications précédentes comprenant des moyens de verrouillage (191, 192) pour maintenir les porte-roues (171, 172) dans la configuration compacte ou la configuration déployée.

7. Véhicule pour enfant selon l'une quelconque des revendications précédentes dans lequel les volets (62) sont montés rotatifs sur des axes de rotation qui sont normaux à des plans sécants entre eux.

8. Véhicule pour enfant selon la revendication précédente comprenant des moyens de retenue des volets (62) en position verticale, les moyens de retenu étant distincts des porte-roues (171, 172).

9. Véhicule pour enfant selon l'une quelconque des revendications précédentes dans lequel le corps de véhicule (10) comprend des formes latérales (15) configurées pour coopérer avec une extrémité du porte-roue (171, 172) de manière à permettre une rotation d'environ 180° du porte-roue dans une zone délimitée par le corps de véhicule (10) et le sol lorsque les porte-roues (171, 172) sont dans la configuration déployée.

## Patentansprüche

1. Fahrzeug für Kinder, umfassend:
- einen Fahrzeugkörper (10), der ein vorderes Ende (11) und ein hinteres Ende (12) aufweist,
- eine vordere Lenkeinheit (20), die an dem vorderen Ende (11) montiert ist und eine Lenksäule (21) umfasst, an der ein vorderes Rad (31) und eine Lenkstange (22) montiert sind,
- einen Sitz (41), der zwischen dem vorderen Ende (11) und dem hinteren Ende (12) montiert ist,
- ein erstes hinteres Rad (321), das mit dem Fahrzeugkörper (10) über einen ersten Radhalter (171) verbunden ist, und ein zweites hinteres Rad (322), das mit dem Fahrzeugkörper (10) über einen zweiten Radhalter (172) verbunden ist, wobei der erste und der zweite Radhalter (171, 172) an dem hinteren Ende (12) drehbar montiert sind zwischen einer kompakten Konfiguration, in der das erste und das zweite hintere Rad (321, 322) in der Nähe des vorderen Endes (11) positioniert sind, und einer ausgeklappten Konfiguration, in der das erste und das zweite hintere Rad (321, 322) von dem vorderen Ende (11) so entfernt sind, dass sie funktionsfähig sind,
wobei der erste und der zweite Radhalter (171, 172) zwischen zwei Konfigurationen beweglich sind, so dass sie voneinander unabhängig sind, wobei das Fahrzeug ferner eine Fußraste (60) umfasst, die einen Fußrastenträger (61) und zwei Klappen (62) umfasst, die auf beiden Seiten des Fußrastenträgers (61) angeordnet sind,
**dadurch gekennzeichnet, dass**
die Fußraste (60) sich zwischen dem vorderen Ende (11) und dem hinteren Ende (12) befindet, wobei die Klappen (62) so ausgebildet sind, dass sie mit den Radhaltern (171, 172) zusammenwirken, um aus einer horizontalen Position in eine vertikale Position gebracht zu werden.

2. Fahrzeug für Kinder, nach Anspruch 1, wobei der erste Radhalter (171) um eine erste Drehachse (A1) an dem hinteren Ende (12) drehbar gelagert ist und der zweite Radhalter (172) um eine zweite Drehachse (A2) an dem hinteren Ende (12) drehbar gelagert ist, wobei jede der ersten und der zweiten Drehachse (A1, A2) mit der Mittelebene (PM) des Fahrzeugkörpers (10) einen Winkel zwischen 60° und 90°, einschließlich, bildet.

3. Fahrzeug für Kinder, nach dem vorhergehenden Anspruch, wobei die erste Drehachse (A1) und die zweite Drehachse (A2) zu sich schneidenden Ebenen normal sind.

4. Fahrzeug für Kinder, nach einem der vorhergehenden Ansprüche, wobei das erste hintere Rad (321) an dem ersten Radträger (171) um eine dritte Drehachse (A3) drehbar gelagert ist und das zweite hintere Rad (322) an dem zweiten Radträger (172) um eine vierte Drehachse (A4) drehbar gelagert ist, wobei die dritte Drehachse (A3) und die vierte Drehachse (A4) zu der Mittelebene (PM) des Fahrzeugkörpers (10) im Wesentlichen parallel angeordnet sind.

5. Fahrzeug für Kinder, nach dem vorhergehenden Anspruch, wobei jedes hintere Rad (321, 322) an einem Zwischenelement (18) drehbar gelagert ist, das seinerseits um die dritte Drehachse (A3) oder die vierte Drehachse (A4) herum drehbar ist, wobei jedes Zwischenelement (18) mit dem Randhalter (171, 182) durch Einstecken verbunden ist.

6. Fahrzeug für Kinder, nach einem der vorhergehenden Ansprüche umfassend Verriegelungsmittel (191, 192), um die Radhalter (171, 172) in der kompakten oder der ausgeklappten Konfiguration zu halten.

7. Fahrzeug für Kinder, nach einem der vorhergehenden Ansprüche, wobei die Klappen (62) an den Drehachsen, die zu sich schneidenden Ebenen normal sind, drehbar gelagert sind.

8. Fahrzeug für Kinder, nach dem vorhergehenden Anspruch umfassend Haltemittel zum Halten der Klappen (62) in vertikaler Position, wobei die Haltemittel von den Radhaltern (171, 172) verschieden sind.

9. Fahrzeug für Kinder, nach einem der vorhergehenden Ansprüche, wobei der Fahrzeugkörper (10) seitliche Formen (15) umfasst, die für das Zusammenwirken mit einem Ende des Radhalters (171, 172) ausgebildet sind, um eine Drehung des Radhalters um etwa 180° in einer von dem Fahrzeugkörper (10) und dem Boden begrenzten Zone zu gestatten, wenn die Radhalter (171, 172) in der ausgeklappten Konfiguration sind.

## Claims

1. Children's vehicle comprising:
- a vehicle body (10) having a front end (11) and a rear end (12),
- a front steering unit (20) mounted on the front end (11) and comprising a steering column (21) on which a front wheel (31) and a handlebar (22) are mounted,
- a seat (41) mounted between the front end (11) and the rear end (12),
- a first rear wheel (321) connected to the vehicle (10) body via a first wheel carrier (171) and a second rear wheel (322) connected to the vehicle body (10) via a second wheel carrier (172),
the first and second wheel carriers (171, 172) being rotatably mounted on the rear end (12) between a compact configuration in which the first and second rear wheels (321, 322) are positioned near the front end (11) and a deployed configuration in which the first and second rear wheels (321, 322) are spaced apart from the front end (11) so as to be operational,
the first and second wheel carriers (171, 172) being movable between the two configurations independently of each other,
the vehicle further comprising a footrest (60) comprising a footrest support (61) and two flaps (62) arranged on either side of the footrest support (61),
**characterized in that**
the footrest (60) is located between the front end (11) and the rear end (12), the flaps (62) being configured to cooperate with the wheel carriers (171, 172) to pass from a horizontal position to a vertical position.

2. Children's vehicle according to claim 1, wherein the first wheel carrier (171) is rotatably mounted about a first axis of rotation (A1) on the rear end (12) and the second wheel carrier (172) is rotatably mounted about a second axis of rotation (A2) on the rear end (12), each of the first and second axes of rotation (A1, A2) forming an angle of between 60° and 90°, inclusive, with the median plane (PM) of the vehicle body (10).

3. Children's vehicle according to the preceding claim, wherein the first axis of rotation (A1) and the second axis of rotation (A2) are normal to planes that intersect each other.

4. Children's vehicle according to one of the preceding claims, wherein the first rear wheel (321) is rotatably mounted on the first wheel carrier (171) about a third axis of rotation (A3) and the second rear wheel (322) is rotatably mounted on the second wheel carrier (172) about a fourth axis of rotation (A4), the third axis of rotation (A3) and the fourth axis of rotation (A4) being arranged substantially parallel to the median plane (PM) of the vehicle body (10).

5. Children's vehicle according to the preceding claim, wherein each rear wheel (321, 322) is rotatably mounted on an intermediate element (18) that is in turn rotatable about the third axis of rotation (A3) or the fourth axis of rotation (A4), each intermediate element (18) being connected to the wheel carrier (171, 172) by fitting.

6. Children's vehicle according to one of the preceding claims, comprising locking means (191, 192) to keep the wheel carriers (171, 172) in the compact configuration or the deployed configuration.

7. Children's vehicle according to any one of the preceding claims, wherein the flaps (62) are rotatably mounted on axes of rotation that are normal to planes that intersect each other.

8. Children's vehicle according to the preceding claim, comprising means for retaining the flaps (62) in the vertical position, the retaining means being separate from the wheel carriers (171, 172).

9. Children's vehicle according to any one of the preceding claims, wherein the vehicle body (10) comprises lateral shapes (15) configured to cooperate with one end of the wheel carrier (171, 172) so as to allow a rotation of approximately 180° of the wheel carrier in an area delimited by the vehicle body (10) and the ground when the wheel carriers (171, 172) are in the deployed configuration.
